# EUROPÄISCHE PATENTSCHRIFT

(11) **EP 3 774 612 B1**
(45) Veröffentlichungstag und Bekanntmachung des Hinweises auf die Patenterteilung: **01.03.2023**
(21) Anmeldenummer: 19759278.5
(22) Anmeldetag: 24.07.2019
(51) Int. Cl.: B65G 63/00, B65G 67/60

(54) **CONTAINER TERMINAL**
CONTAINER TERMINAL
TERMINAL DE CONTENEURS

(30) Priorität: 03.08.2018 CH 9522018
(43) Veröffentlichungstag der Anmeldung: 17.02.2021
(73) Patentinhaber: Schweizer, Thomas, 4133 Pattreln (CH)
(72) Erfinder: Schweizer, Thomas, 4133 Pattreln (CH)
(74) Vertreter: Kieffer, Valentin
(86) Internationale Anmeldenummer: PCT/CH2019/050015
(87) Internationale Veröffentlichungsnummer: WO 2020/024069

(56) Entgegenhaltungen:
- EP-A1- 0 768 256
- EP-A2- 2 641 856
- DE-A1- 2 114 705
- JP-A- H09 156 769
- JP-A- 2010 260 718
- JP-A- 2016 064 876
- US-A- 839 921
- US-A- 1 438 183
- US-A- 3 669 206

## Beschreibung

Die vorliegende Erfindung betrifft einen Container Terminal gemäss Oberbegriff des Patentanspruchs 1.

Die bekannten Container Terminals arbeiten mit verschiedenen Arten von AGVs (Automated Guided Vehicles), welche jeweils auf einer Ebene lange Distanzen zurücklegen um die Container zwischen den Schiffen und den Landfahrzeugen zu transportieren. Dadurch wird viel Energie (Dieselkraftstoff oder elektrische Energie) für den Transport der Container aufgewendet. Da neben diesen AGVs sämtliche weiteren Verkehrsteilnehmer auf derselben Ebene operieren gibt es viele Berührungspunkte, wo Verkehrswege von unterschiedlichen Verkehrsteilnehmern gleichzeitig genutzt werden oder sich kreuzen.

Herkömmliche Container Terminals sind daher energieintensiv, gefährlich und kaum begehbar. Es gibt viele Transportgeräte auf einer Ebene, grosse Kollisionsgefahr mit Wartungs- und Betriebsfahrzeugen sowie mit Personal und dadurch bedingt ständiges Hupen oder Klingeln der verschiedenen Geräte (Warnfunktionen).

Die Patentschrift EP 2 641 856 A2 offenbart AGVs zum Einsatz in einem Container Terminal. Darin wird ausführlich die Verwendung und heutigen Möglichkeiten der AGVs gezeigt. Damit diese auch in anderen Bereichen verkehren können, wird eine Fahrerkabine angebaut und ist zusätzlich eine manuelle Steuerung vorgesehen. Ausserdem müssen die automatischen Fahrzeuge unter grossem Aufwand mit Energie versorgt werden.

In der Patentschrift US 2006/0182527 A1 wird eine Methode zur Automatisierung eines Container Terminals mit automatischen Fahrzeugen beschrieben. Ebenso wie die Steuerung der Logistikkette innerhalb des Terminals. Auch bei dieser Lösung gibt es keine Entflechtung der Transportwege. Ausserdem müssen auch hier die automatischen Fahrzeuge unter grossem Aufwand mit Energie versorgt werden.

In der Patentschrift JPH09156769A wird ein Container Terminal gemäß dem Oberbegriff des Anspruchs 1 mit einer Grundebene und einer darüberangeordneten erhöhten Ebene offenbart, auf welche automatische Fahrzeuge sich bewegen können, ohne sich zu kreuzen.

Die vorliegende Erfindung stellt sich nunmehr die Aufgabe ein Container Terminal der eingangs genannten Art derart zu verbessern, dass die Vorteile der bekannten Container Terminals erhalten bleiben, das Terminal die Verkehrswege der verschiedenen Verkehrsteilnehmer entflechtet, der Energieverbrauch reduziert wird, die Lärm- und Lichtemissionen reduziert, die Umschlags- und Lagertätigkeiten optimiert werden, sowie der Platzbedarf des Terminals reduziert wird.

Diese Aufgabe löst ein Container Terminal mit den Merkmalen des Patentanspruches 1. Weitere Merkmale und Ausführungsbeispiele gehen aus den abhängigen Ansprüchen hervor und deren Vorteile sind in der nachfolgenden Beschreibung erläutert.

### Zeichnungen

- Fig 1: Draufsicht auf eine mögliche Grundvariante des Containerloop und den diversen daran angeschlossenen Verkehrsträger.
- Fig 2: Skizzenhafter Querschnitt durch die gesamte Anlage vom Schiff bis zum Bahnterminal mit dem Rundlauf als Schiefe Ebene. Sowie eine Detailzeichnung der Verladeebene.
- Fig 3: Skizzenhafte Darstellung der zusätzlichen Module für Brandbekämpfung und Personentransport.
- Fig 4: Ansicht eines erfindungsgemässen Ausführungsbeispiels eines solchen Containerloop in städtischem Gebiet am Beispiel Basel CH.
- Fig 5: Draufsicht und einen Querschnitt für die Anwendung in einem Küstenbereich mit ungenügender Wassertiefe für die anlegenden Schiffe

Die Figuren stellen mögliche Ausführungsbeispiele dar, welche in der nachfolgenden Beschreibung erläutert werden.

### Beschreibung

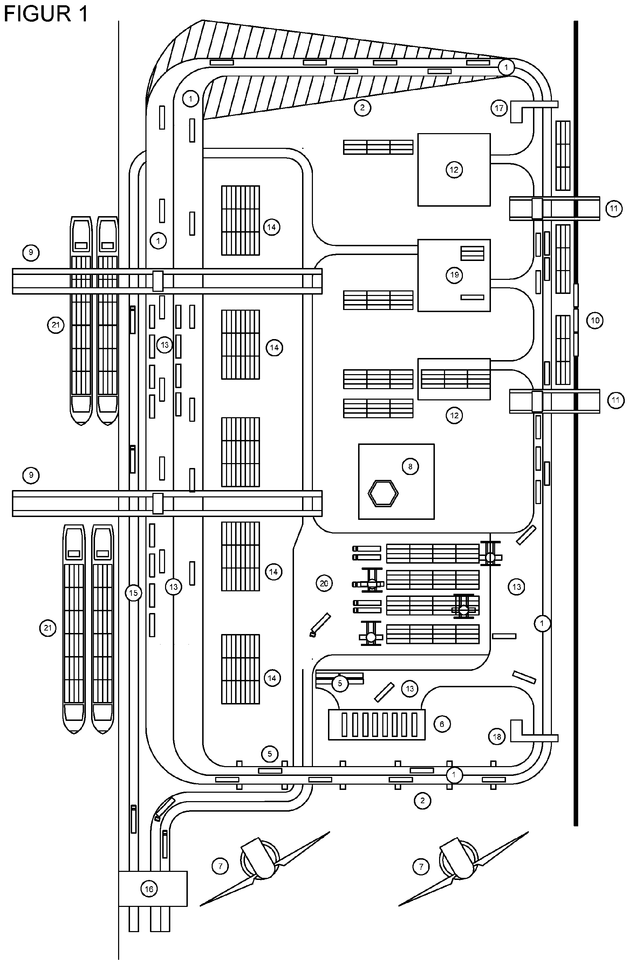

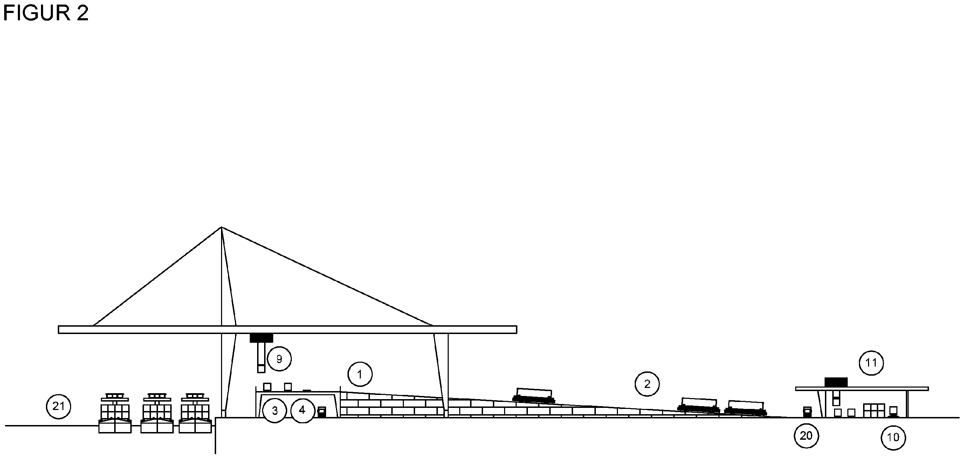

Im Container Terminal ist ein Containerloop 1 (Containerschleife) vorgesehen auf welcher sich ausschliesslich AGVs fortbewegen (Fig 1). Bei diesem Containerloop 1 handelt es sich um einen Rundkurs auf welchem sich die AGVs alle in derselben Richtung fortbewegen, wobei in einzelnen Bereichen oder über die gesamte Strecke der Containerloop mehrspurig sein kann. Dieser Containerloop ermöglicht es, mit den AGVs die Container beim Schiffskran 9 abzuholen und beim Umschlagskran abzuliefern, oder umgekehrt ohne dass andere Verkehrsteilnehmer davon betroffen sind. Erfindungsgemäss ist vorgesehen, dass der Containerloop 1 auf mindestens zwei Ebenen unterschiedlicher Höhe angeordnet ist. Damit wird ermöglicht, dass im Bereich des Schiffskrans 9 zusätzlich eine Fahrbahn 15 auf einer anderen Ebene geführt wird (Fig 2). Diese Fahrbahn 15 ist in diesem Bereich parallel zum Containerloop 1 und ermöglicht so Personen und Fahrzeugen das Erreichen des Schiffs ohne dass auf den Betrieb der AGVs Rücksicht genommen werden muss. Als zusätzlicher Vorteil wird die Zu- und Abfahrt der Fahrbahn 15 ebenfalls nicht auf der Ebene des Containerloop 1 geführt, so dass keine Kreuzungen zwischen der Fahrbahn 15 und dem Containerloop 1 bestehen. Die Verkehrswege sind also komplett entflochten.

Die Ladeebene 3 ist der Bereich unter dem Containerloop 1 beim Schiffskran 9 und wird über die Fahrbahn 15 erreicht. Diese Ladeebene 3 ist somit ausserhalb des Sicherheitsbereiches in welchen die AGVs zum Einsatz kommen, so dass Personen und Fahrzeuge dort unabhängig vom Umschlagsbetrieb sicher und direkt Schlüsselstellen erreichen können. Idealerweise ist die Ebene des Containerloop 1 nicht durchgehend, sondern teilweise als Brücke geführt, so dass der Schiffskran 9 auch Ladungen oder Container direkt von der Ladeebene 3 aufnehmen bzw. dort abladen kann. Der Vorteil dieser Anordnung ist, dass im Schutz der Brücken alle wichtigen Bereiche unter den Containerkranen erreicht werden können. Schiffspersonal und Bedienpersonal (4) kann so, ungehindert vom Umschlagsbetrieb, gefahrlos die gewünschten Orte erreichen. Das laute Hupen oder Klingeln der AGV's entfällt ganz, so dass die Lärmemissionen des Containerterminal stark reduziert werden. Aufgrund dieser Anordnung birgt auch ein aus dem Kran fallender Container für die darunter verkehrenden Mannschaften kaum Gefahr.

Vorteilhaft an dieser Anordnung der Ladeebene 3 unterhalb des Containerloop 1 ist zudem, dass sich die AGVs näher an der Kranwinde befinden, so dass die Container weniger weit hochgehoben werden müssen, was hilft die Pendelbewegungen der im Kran hängenden Container beim Be- und Entladen des Schiffs zu reduzieren, so dass das Absetzen der Container auf den AGVs schneller vollzogen werden kann und in die umgekehrte Richtung ebenfalls effizienter und sicherer gearbeitet werden kann.

Dank dieser Entflechtung von den übrigen Fahrzeugen und Personen und da sämtliche AGVs in dieselbe Richtung fahren, kann die Geschwindigkeit und Dichte der AGVs optimiert werden, so dass die Umschlagsfrequenz der Container gegenüber einem herkömmlichen Container Terminal stark erhöht werden kann. Je nach Stand der Entwicklung der AGVs sollten Fahrgeschwindigkeiten bis 50 km/h erreichbar sein. Mit mehreren Spuren können die AGVs mit optimalen Sicherheitsabständen und dem aktuellen Bedarf angepassten Geschwindigkeiten verkehren. Ebenfalls wird die Anzahl der AGVs, welche auf dem Containerloop 1 im Einsatz sind, bedarfsgerecht angepasst und kann idealerweise von einem zentralen Rechner gesteuert werden.

Die AGVs können mit Sensoren ausgerüstet werden, welche den Abstand ermitteln um sicherzustellen, dass ein folgendes AGV nicht mit dem vorausfahrenden AGV zusammenstösst, sobald dieses verlangsamt. Diese Abstandssensoren können zum Beispiel mit Infrarot funktionieren, so dass kein Tageslicht oder auch keine künstliche Beleuchtung benötigt wird. Dies hat den grossen Vorteil, dass diejenigen Bereiche in welchen nur die AGVs verkehren auch auf eine Beleuchtung verzichtet, werden kann. Dadurch werden die Lichtemissionen des Containerterminal reduziert und zumindest in gewissen Bereichen des Containerloop komplett vermieden.

In einer bevorzugten Ausführungsform befindet sich im Bereich eines oder mehrerer Umschlagkräne 11 ein Bahnterminal 10 mit einem Bahngleis auf gleicher Ebene mit dem Containerloop 1. Dies erlaubt, dass die AGV's auf dem Containerloop 1 direkt neben die Bahnwagen (10) manövriert werden können. So kann ein ganzer Eisenbahnzug in voller Länge ohne Manöver schnell beladen werden. Man benötigt nur einen oder mehrere Kräne 11 die in Längsrichtung über dem Zug fahrend die Container verladen können.

Damit die AGVs die Ebenen unterschiedlicher Höhe dem Containerloop 1 erreichen können, werden diese durch eine schiefe Ebene (2) verbunden. Um optimale Energiespareffekte zu erreichen kann die Höhendifferenz der Ebenen und die Länge der Transportdistanzen zwischen den Ebenen angepasst werden. Ein Vorteil liegt insbesondere dann vor, wenn die mit dem Kran-Hub eingebrachte Höhenenergie beim Abwärtsfahren auf der schiefen Ebene 2 in Bewegungsenergie umgesetzt wird. Die schiefe Ebene 2 kann als Damm oder Brücke gebaut werden. Da in einem Import Hafen meistens geladene Container angeführt werden, kann über die schiefe Ebene bei der Abwärtsfahrt von der Ebene beim Schiffskran zur Ebene des Umschlagskrans sogar Energie zurückgewonnen werden, so dass die Batterie eines elektrisch betriebenen AGV aufgeladen werden kann. Einerseits können so Energierückgewinnungssysteme optimal eingesetzt werden, z.B. wenn ein mit 40 Tonnen geladener 40' Container abwärts bewegt wird und danach nur ein 4 Tonnen schwerer leerer 40' Container wieder aufwärts transportiert werden muss. So können auch AGVs mit kleineren Batterien eingesetzt werden und es werden auch C02 Reduktionen erzielt.

Gemäss einer bevorzugten Ausführungsform ist das Container Terminal über eine zentrale Erfassungsstelle 8 gesteuert. Dort werden die Ankunftszeiten der Schiffe und Container erfasst und mit den verschiedenen Leistungsträgern koordiniert. Nach Erfassung errechnet man mit einer geeigneten Softwarelösung die Anzahl AGVs und deren optimale Geschwindigkeit, um den Schiffs- und den Umschlagskran in optimaler Frequenz mit Containern bedienen zu können.

Eine weitere vorteilhafte Ausgestaltung des Container Terminals beinhaltet die Möglichkeit des diskriminierungsfreien Zugangs mehrerer auf dem Gelände angesiedelten Firmen 12 zum Containerloop. Dazu kann der Containerloop in bestimmten Bereichen des Terminals in mehreren Schlaufen und mit Abzweigungen geführt werden. Je nach Bedarf werden die Container dann über diese Zusatzschleifen mit den AGVs an diese Firmen angeliefert oder durch die AGVs dort abgeholt. Es spielt dabei keine Rolle ob eine Firma einen Container pro Tag bereitstellt oder mehrere tausend. Jeder zu transportierende Container wird angemeldet und «just in Time» durch das von der Erfassungsstelle 8 gesteuerte AGV abgeholt oder geliefert.

Vorzugsweise ist der Containerloop optimal den örtlichen Gegebenheiten mit Strassen und Bahnzugang anzupassen. Besonders Vorteilhaft ist bei dem Containerloop, dass die per Strasse oder Bahn angelieferten Container mit den AGVs zum Verladekran und/oder einem Zwischenlager gefahren werden können noch bevor ein Schiff angelegt hat. Vom dortigen Zwischenlager 14 können dann bei Ankunft des Schiffes die Container zügig verladen werden. Auf diese Weise können Standzeiten bei allen Verkehrsmitteln optimiert und verkürzt werden.

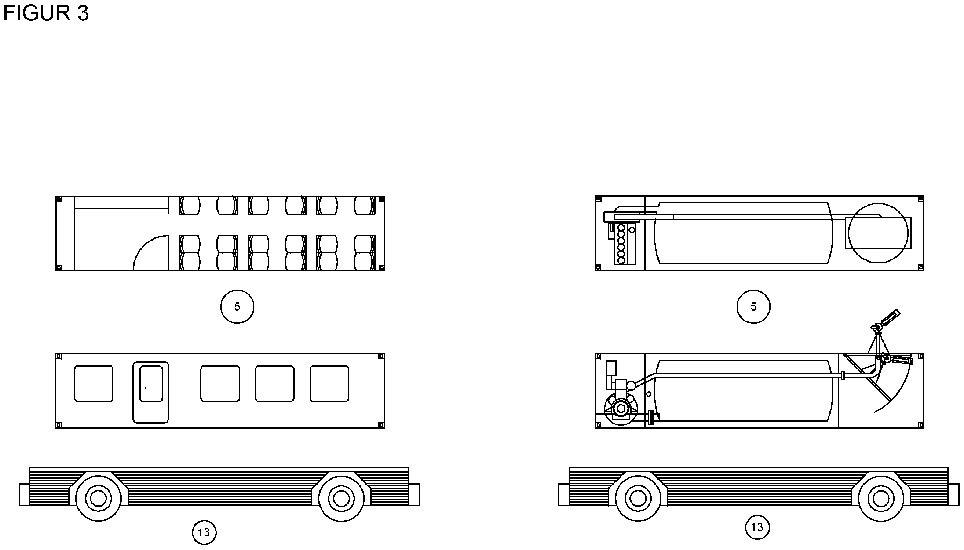

In einer weiteren Ausgestaltung des erfindungsgemässen Container Terminals ist der Einsatz von verschiedenen Containermodulen 5 vorgesehen (Fig 3), welche auch auf den AGVs platziert werden können. Dazu zählen 20 oder 40' Container als Brandbekämpfungsmodule, als Personen- und oder Materialtransportmodule (5). Diese Module können jederzeit bedarfsgerecht in den Verkehr auf der Containerschleife eingeführt werden. Diese werden idealerweise in einem oder mehreren dafür vorgesehenen Bereichen des Containerloop 1 bereitgehalten.

Wird ein Container mit Gefahrgut transportiert besteht so auch die Möglichkeit zusätzlich zu einem erhöhten Sicherheitsabstand zwischen den AGVs auf der Schleife, auch den Gefahrgutcontainer zur Sicherheit mit einem zweiten AGV mit Brandbekämpfungsmodul zu begleiten.

In einer möglichen Ausführungsform sind diese Containermodule bei der zentralen Ladestation 6 gelagert, wo auch die AGVs aufgeladen werden können. Je nach Grösse und Anordnung des Container Terminals macht es auch Sinn an verschiedenen Orten des Containerloop 1 solche Ladestationen einzurichten. In Küstengebieten mit viel Wind könnte eine solche Ladestation auch gleich mit einer oder mehreren Windkraftanlagen 7 versorgt werden, so dass die Stromproduktion zum Laden der Batterien der AGVs ebenfalls möglichst ohne CO2 Emissionen erfolgt.

Gleichzeitig kann ein solcher Containerloop für wissenschaftliche Versuche und Untersuchungen mit autonomen Fahrzeugen benutzt werden. Insbesondere im Zusammenhang mit Energieeffizienz und der Optimierung von Batterien und anderen Bestandteilen von elektrisch angetriebenen Fahrzeugen, kann dies von grossem Nutzen und Interesse sein. Auf diese Weise kann der Ausnutzungsgrad des Containerloop zusätzlich erheblich gesteigert werden.

In einer weiteren bevorzugten Ausführungsform können unter der Ladeebene 3 auch Parkplätze für PKW oder sogenannte Expressspuren für eilige Lieferungen oder Abholungen von Containern vorgesehen werden. Diese werden in der Regel mit LKW transportiert und an der Eingangspforte bei der Erfassungsstelle angemeldet. Dort wird entschieden ob es eine normale Abfertigung ist oder eine Expressabfertigung benötigt wird. Expressabfertigungen können gegen eine Sondergebühr (Umwelttaxe) erfolgen, um so den LKW Verkehr im Terminal zu regulieren. Trotzdem ist unabhängig vom Verkehr mit AGVs auf dem Containerloop 1 jederzeit eine unabhängige und schnelle Anlieferung direkt zum Schiffskran (9) möglich.

Gemäss einer weiteren Ausführungsform kann die Containerschleife an zwei oder mehr Stellen mit einem Scanner ausgerüstet werden. Zum Beispiel einmal für Import 17 und einmal für Export 18. Somit hat man von der zentralen Erfassungsstelle 8 aus jederzeit Zugang für eine Überprüfung des Inhalts. Verdächtige Container können dann von der Schleife genommen und in der Zollstelle 19 überprüft werden.

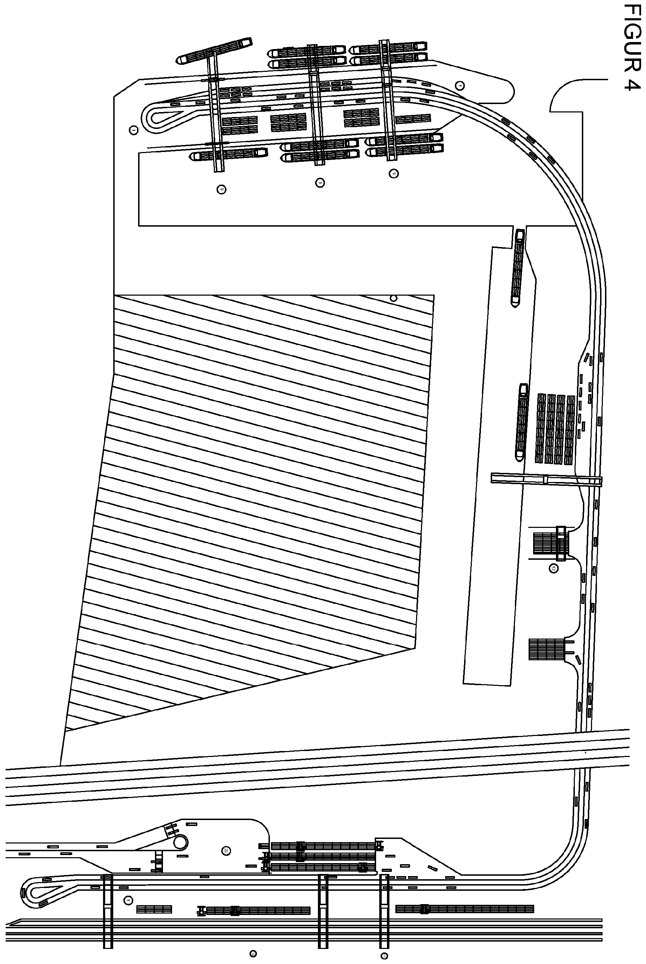

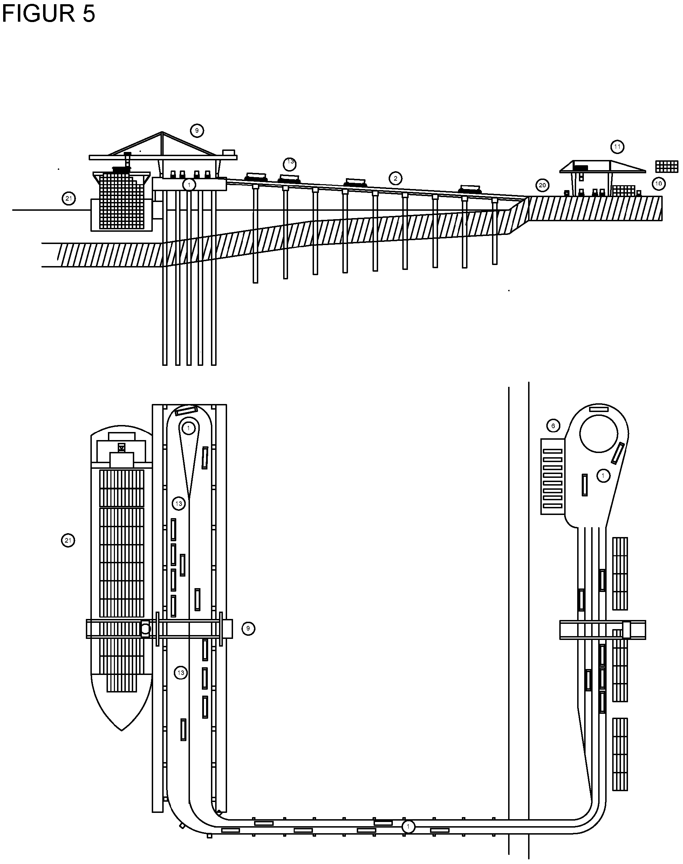

Das erfindungsgemässe Container Terminal mit Containerloop ist den verschiedensten Hafen- und Geländesituationen anpassbar. Mögliche Beispiele werden in Fig. 4 und Fig. 5 gezeigt.

## Patentansprüche

1. Container Terminal umfassend
mindestens einen Schiffskran (9) zum Beladen und Entladen eines Containerschiffs (21),
mindestens einen Umschlagkran (11) zum Beladen und Entladen eines Landfahrzeugs wie zum Beispiel einem Lastwagen oder Bahnwagen, AGVs (13) und einen als Containerloop (1) bezeichneten Rundkurs für die AGVs (13)
wobei im Bereich des Schiffskrans (9) eine Fahrbahn (15) unterhalb und parallel zum Containerloop (1) geführt ist und
keine Kreuzungen zwischen der Zu- und Abfahrt der Fahrbahn (15) und dem Containerloop (1) bestehen, **dadurch gekennzeichnet, dass** der Containerloop (1) auf mindestens zwei Ebenen unterschiedlicher Höhe angeordnet ist, und wobei die erste Ebene und die zweite Ebene durch eine schiefe Ebene (2) verbunden sind.

2. Container Terminal gemäss Anspruch 1,
**dadurch gekennzeichnet, dass**
im Bereich des Umschlagkrans (11) sich ein Bahnterminal (10) mit einem Bahngleis und direktem Anschluss an den Containerloop (1) befindet.

3. Container Terminal gemäss Anspruch 1,
**dadurch gekennzeichnet, dass**
die AGVs über einen elektrischen Antrieb mit einer Batterie verfügen und während der Abwärtsfahrt von der höheren auf die tieferen Ebene auf dem Containerloop (1) die Batterie aufgeladen wird.

4. Container Terminal gemäss Anspruch 1,
**dadurch gekennzeichnet, dass**
der Containerloop (1) mehrspurig ist und in mehreren Schlaufen und mit Abzweigungen geführt wird.

5. Container Terminal gemäss Anspruch 1,
**dadurch gekennzeichnet, dass**
in einem Bereich der Containerloop die AGVs mit Containermodulen (5) zur Brandbekämpfung, Wartung oder Personentransport beladen werden.

6. Container Terminal gemäss Anspruch 1,
**dadurch gekennzeichnet, dass**
an einer oder mehreren Stellen der Containerloop (1) Ladestationen (6) für die AGVs eingerichtet sind.

7. Container Terminal gemäss Anspruch 1,
**dadurch gekennzeichnet, dass** die AGVs mit Abstandsensoren ausgerüstet sind,
wobei diese Abstandssensoren ohne Licht oder mit nur sehr geringem Licht funktionieren.

8. Verwendung eines als Containerloop (1) bezeichneten Rundkurses für AGVs in einem Container Terminal gemäss Anspruch 1 mit einer zentralen Erfassungsstelle (8) für Container,
**dadurch gekennzeichnet, dass**
eine Zentrale alle von der Erfassungsstelle zur Abwicklung angemeldeten Container erfasst und daraus die optimale Menge und Geschwindigkeit der auf der Containerschleife verkehrenden AGVs bestimmt.

9. Verwendung des Containerloop (1) gemäss Anspruch 8,
**dadurch gekennzeichnet, dass**
auf dem Containerloop (1) verschiedene Betriebe oder Lager mit den AGVs angefahren werden können, so dass jeder Nutzer einen Zugang zu den Transportleistungen und den Verlademöglichkeiten erhält.

10. Verwendung des Containerloop (1) gemäss Anspruch 8,
**dadurch gekennzeichnet, dass**
sämtliche permanenten Einrichtungen des Container Terminals, wie AGVs und Krane, elektrisch betrieben sind und keine Verbrennungsmotoren zum Einsatz kommen.

## Claims

1. Container terminal comprising
at least one ship crane (9) for loading and unloading a container ship (21),
at least one handling crane (11) for loading and unloading a land vehicle such as a truck or rail car, AGVs (13) and
a circuit for the AGVs (13) called container loop (1)
wherein
in the area of the ship crane (9), a roadway (15) runs below and parallel to the container loop (1) and
there are no crossings between the entrance and exit of the roadway (15) and the container loop (1),
**characterised in that**
the container loop (1) is arranged on at least two levels of different heights, and wherein the first level and the second level are connected by an inclined level (2).

2. Container terminal according to claim 1,
**characterised in that**
in the area of the handling crane (11), there is a railway terminal (10) with a railway track and direct connection to the container loop (1).

3. Container terminal according to claim 1,
**characterised in that**
the AGVs have an electric drive with a battery and the battery is charged during the descent from the higher to the lower level on the container loop (1).

4. Container terminal according to claim 1,
**characterised in that**
the container loop (1) has multiple lanes and is routed in several loops and with branches.

5. Container terminal according to claim 1,
**characterised in that**
in one area of the container loop, the AGVs are loaded with container modules (5) for firefighting, maintenance or passenger transport.

6. Container terminal according to claim 1,
**characterized in that**
charging stations (6) for the AGVs are set up at one or more points of the container loop (1).

7. Container terminal according to claim 1,
**characterized in that** the AGVs are equipped with distance sensors, these distance sensors functioning without light or with only very little light.

8. Use of a circuit for AGVs called container loop (1) in a container terminal according to claim 1 with a central registration point (8) for containers,
**characterised in that**
a control centre records all containers registered for operation by the registration point and determines on that basis the optimal quantity and speed of the AGVs operating on the container loop.

9. Use of the container loop (1) according to claim 8,
**characterised in that**
on the container loop (1), different companies or warehouses can be accessed with the AGVs, so that every user has access to the transport services and the loading options.

10. Use of the container loop (1) according to claim 8,
**characterised in that**
all permanent equipment of the container terminal, such as AGVs and cranes, are electrically operated and no combustion engines are used.

## Revendications

1. Terminal de conteneurs comprenant
au moins une grue de navire (9) pour le chargement et le déchargement d'un porte-conteneurs (21),
au moins une grue de manutention (11) pour le chargement et le déchargement d'un véhicule terrestre tel qu'un camion ou un wagon, des AGV (13) et
un circuit pour les AGV (13) appelé boucle à conteneurs (1)
dans lequel
dans la zone de la grue de navire (9), une chaussée (15) s'étend en dessous et parallèlement à la boucle de conteneur (1) et
il n'y a pas de croisement entre l'entrée et la sortie de la chaussée (15) et la boucle à conteneurs (1),
**caractérisé en ce que**
la boucle à conteneurs (1) est agencée sur au moins deux niveaux de hauteurs différentes, le premier niveau et le deuxième niveau étant reliés par un plan incliné (2).

2. Terminal de conteneurs selon la revendication 1,
**caractérisé en ce que**
dans la zone de la grue de manutention (11) se trouve un terminal ferroviaire (10) avec une voie ferrée et une connexion directe à la boucle à conteneurs (1).

3. Terminal de conteneurs selon la revendication 1,
**caractérisé en ce que**
les AGV ont un entraînement électrique avec une batterie et la batterie est chargée pendant la descente du niveau supérieur au niveau inférieur sur la boucle à conteneurs (1).

4. Terminal de conteneurs selon la revendication 1,
**caractérisé en ce que**
la boucle à conteneurs (1) a plusieurs voies et est agencée en plusieurs boucles et avec des embranchements.

5. Terminal de conteneurs selon la revendication 1,
**caractérisé en ce que**
dans une zone de la boucle à conteneurs, les AGV sont chargés de modules conteneurs (5) pour la lutte contre l'incendie, la maintenance ou le transport de passagers.

6. Terminal de conteneurs selon la revendication 1,
**caractérisé en ce que**
des stations de charge (6) pour les AGV sont implantées en un ou plusieurs points de la boucle à conteneurs (1).

7. Terminal de conteneurs selon la revendication 1,
**caractérisé en ce que** les AGV sont équipés de capteurs de distance, ces capteurs de distance fonctionnant sans lumière ou avec très peu de lumière.

8. Utilisation d'un circuit pour AGV dit boucle à conteneurs (1) dans un terminal de conteneurs selon la revendication 1 avec un point central d'enregistrement (8) pour conteneurs,
**caractérisée en ce que**
un centre de contrôle enregistre tous les conteneurs enregistrés par le point d'enregistrement pour traitement et en déduit la quantité et la vitesse optimales des AGV opérant sur la boucle à conteneurs.

9. Utilisation de la boucle à conteneurs (1) selon la revendication 8,
**caractérisée en ce que**
sur la boucle à conteneurs (1), différentes entreprises ou entrepôts peuvent être aaccédés avec les AGV, de sorte que chaque utilisateur a accès aux services de transport et aux options de chargement.

10. Utilisation de la boucle de conteneur (1) selon la revendication 8,
**caractérisée en ce que**
tous les équipements permanents du terminal à conteneurs, tels que les AGV et les grues, fonctionnent à l'électricité et aucun moteur à combustion n'est utilisé.
